Europäisches Patentamt

European Patent Office

Office européen des brevets

(11) Veröffentlichungsnummer: **0 254 849**
**A1**

# (12) EUROPÄISCHE PATENTANMELDUNG

(21) Anmeldenummer: **87108475.2**

(22) Anmeldetag: **12.06.87**

(51) Int. Cl.³: **A 44 B 19/16**
**F 16 L 59/10**

(30) Priorität: **30.07.86 DE 3625772**

(43) Veröffentlichungstag der Anmeldung:
**03.02.88 Patentblatt 88/5**

(84) Benannte Vertragsstaaten:
**AT BE CH FR GB IT LI NL**

(71) Anmelder: **ASF Verwaltungs-GmbH**
**Rennweg 50**
**D-8500 Nürnberg(DE)**

(72) Erfinder: **Siegel, Alexander**
**Schonhoverstrasse 2**
**D-8500 Nürnberg 20(DE)**

(74) Vertreter: **Lorenz, Eduard**
**Rechtsanwälte Eduard Lorenz - Bernhard Seidler Margrit**
**Seidler - Dipl.-Ing. Hans-K. Gossel Dr. Ina Philipps - Dr.**
**Paul B. Schäuble Dr. Siegfried Jackermeier**
**Dipl.-Ing. Armin Zinnecker Widenmayerstrasse 23 D-8000**
**München 22(DE)**

(54) Verschlussband aus Kunststoff.

(57) Die Erfindung bezieht sich auf ein Verschlußband (1,2) aus Kunststoff, bestehend aus zwei Befestigungsstreifen (3,4) mit je einem Verschlußrücken (5,6), in welchem nur eine Rillen-Profilnut (7,8) bzw. nur ein komplementär ausgebildeter Rillen-Profilsteg (9,10,11,12) zum gegenseitigen Ineinandergreifen angeordnet sind, deren Vertiefungen bzw. Erhebungen sich jeweils senkrecht zu einem Verschluß-Rücken erstrecken. Zu dem Zweck, ohne Überdimensionierung des Verschlusses eine ausreichende Festigkeit für den Anwendungszweck einer Umkleidung für Rohrleitungen zu gewährleisten, obwohl der Verschluß dabei gleichzeitig in Längsrichtung der Verschlußbänder als auch senkrecht dazu beansprucht wird, sind Profilsteg (9,10,11,12) und Profilnut (7,8) mit Hilfe von sechs Haken (13,14,15,16) gegenseitig gehalten.

Fig. 1

## Beschreibung:

Die Erfindung bezieht sich auf ein Verschlußband gemäß dem Gattungsbegriff des Patentanspruchs 1.

Ein derartiges Verschlußband ist aus der DE-OS 31 39 652 bekannt. Bei diesem Verschluß hat sich jedoch in der Praxis herausgestellt, daß er nur bei einer Überdimensionierung im Vergleich zu normalen Verschlußbändern brauchbar war. Die Praxis war deshalb wieder auf normale Zwei-Rillen-Verschlüsse übergegangen, welche jedoch den Nachteil besitzen, daß für den Benutzer die Gefahr besteht, daß nur der äußere Profilsteg mit der äußeren Rillennut in Eingriff gebracht werden. Es stellt sich dann der Nachteil ein, daß der Verschluß unbeabsichtigt wieder geöffnet wird.

Der Erfindung liegt die Aufgabe zugrunde, ohne Überdimensionierung des Verschlusses eine auch für den im Gattungsbegriff des Patentanspruchs 1 genannten vorzugsweisen Anwendungszweck ausreichende Festigkeit des Verschlusses zu gewährleisten, und zwar auch dann, wenn der Verschluß gleichzeitig in Längsrichtung der Verschlußbänder als auch senkrecht dazu beansprucht wird.

Die Lösung der gestellten Aufgabe erfolgt gemäß dem Kennzeichen des Anspruchs 1, in besonders vorteilhafter Weise gemäß den kennzeichnenden Merkmalen des Patentanspruchs 2. Der erfindungsgemäße Verschluß hat den Vorteil, daß er auch unter den bei Walkbewegungen auftretenden Kräften nicht unbeabsichtigt geöffnet wird.

Das erfindungsgemäße Verschlußband ist in der nachstehenden
Beschreibung anhand der Zeichnung in verschiedenen Ausführungsformen beispielhaft erlautert. Es zeigen:

Fig. 1    einen Querschnitt von zwei Verschlußbändern,
          deren Verschlüsse miteinander in Eingriff gebracht sind, in einer ersten Ausführungsform;

Fig. 2    die gleiche Darstellung einer zweiten Ausführungsform;

Fig. 3    die gleiche Schnitt-Darstellung einer weiteren
          Ausführungsform;

Fig. 4    zwei nicht verbundene Verschlußbander in einer
          Ausführungsform mit Aufreißfahne in Schnitt-
          Darstellung;

Fig. 5    zwei miteinander verbundene Verschlußbänder einer
          weiteren abgewandelten Ausführungsform und

Fig. 6    erfindungsgemäße Verschlußbänder in Anwendung
          innerhalb einer isolierenden Rohrverkleidung.

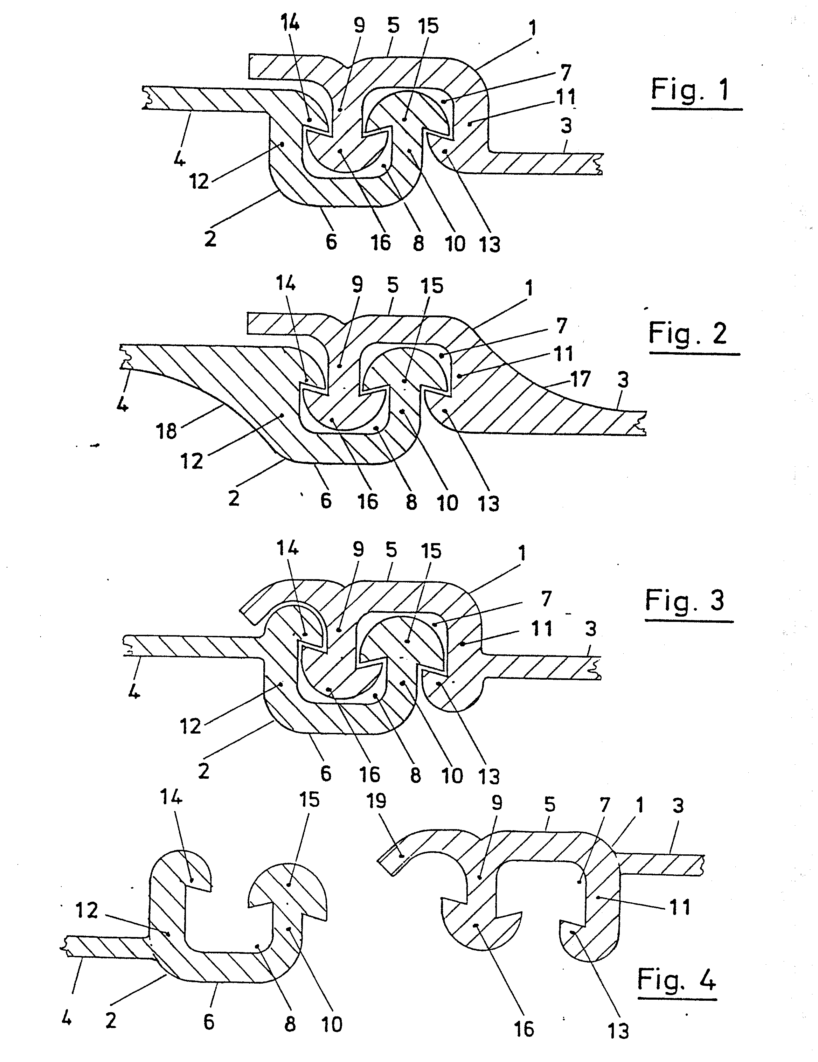

Die in Fig. 1 dargestellten Verschlußbänder 1,2 aus Kunststoff bestehen jeweils aus einem Befestigungsstreifen 3,4
und je einem Verschlußrücken 5,6. In den Verschlußrücken 5,6
sind zum gegenseitigen Ineinandergreifen der Verschlußbänder nur je eine Rillen-Profilnut und je ein komplementär
ausgebildeter Rillen-Profilsteg 9,10 angeordnet. Deren Vertiefung bzw. Erhebung erstrecken sich jeweils senkrecht zum
Verschlußrücken 5 bzw. 6. Die beiden senkrechten Stege 9,11
bzw. 10,12 der Rillen-Profilnuten 7 bzw. 8 sind einerseits mit einem nach innen gerichteten Haken 13, 14 und andererseits mit je einem Doppel-Haken 15 bzw. 16 ausgebildet. Jeder
Rillen-Profilnut 7 bzw. 8 ist nur ein Rillen-Profilsteg 15
bzw. 16 zugeordnet, der als Doppelhaken ausgebildet ist. Alle
Haken sind, wie sich ohne weiteres aus Fig. 1 ergibt, leicht
hinterschnitten ausgebildet.

Die beschriebenen Verschlußbänder gemäß Fig. 1 sind in der
Ausführungsform gemäß Fig. 2 derart weiter ausgebildet, daß
die Rücken 17, 18 des mit einem nach innen gerichteten Hakens
13 bzw. 14 ausgebildeten Nut-Steges 11 bzs. 12 verstärkt sind.
Verschlußbänder dieser Ausführungsform nach Fig. 2 halten
noch besser als solche in der Ausführungsform nach Fig. 1.

Die Besonderheit der Ausführungsform gemäß Fig. 3 besteht
darin, daß die Hakenflächen der Doppel-Haken 15, 16 senkrecht zueinander versetzt angeordnet sind und daß die Befestigungsbänder 3,4 im Vergleich zu der Ausführungsform nach
Fig. 1 im wesentlichen in der gleichen waagerechten Ebene
an den äußeren Nutstegen 11, 12 angesetzt sind. Der Vorteil
dieser Ausführungsform besteht darin, daß der Verschluß nach
Befestigung der Verschlußbänder glatt an der Befestigungsflache anliegt, so daß er insbesondere nicht kippen kann.

Aus Fig. 4 ist ersichtlich, daß an wenigstens einem Verschlußband eine Aufreißfahne 19 ausgebildet sein kann und daß die Befetigungsstreifen auch nahe an den jeweiligen Profilrücken angebracht
werden können.
Zwecks Ausbildung als Druck- oder Schiebeverschluß mit Kopf-
Schieber kann in einer weiteren, nicht dargestellten Ausführungsform ein Befestigungsstreifen an einem Verschlußrücken angesetzt sein und erstrecken sich beide Befestigungsstreifen in derselben Richtung.

Die Stabilität des Verschlusses gegen ein unbeabsichtigtes

Öffnen nach dem Verschlieken der Verschlußbänder ist in samtlichen Ausführungsformen gegenüber dem Stand der Technik wesentlich verbessert. Die Verschlußbänder können in einer weiteren, ebenfalls nicht abgebildeten Ausführsform mittels eines Schiebers verschlossen und wieder geöffnet werden, wie dies an sich bekannt ist.

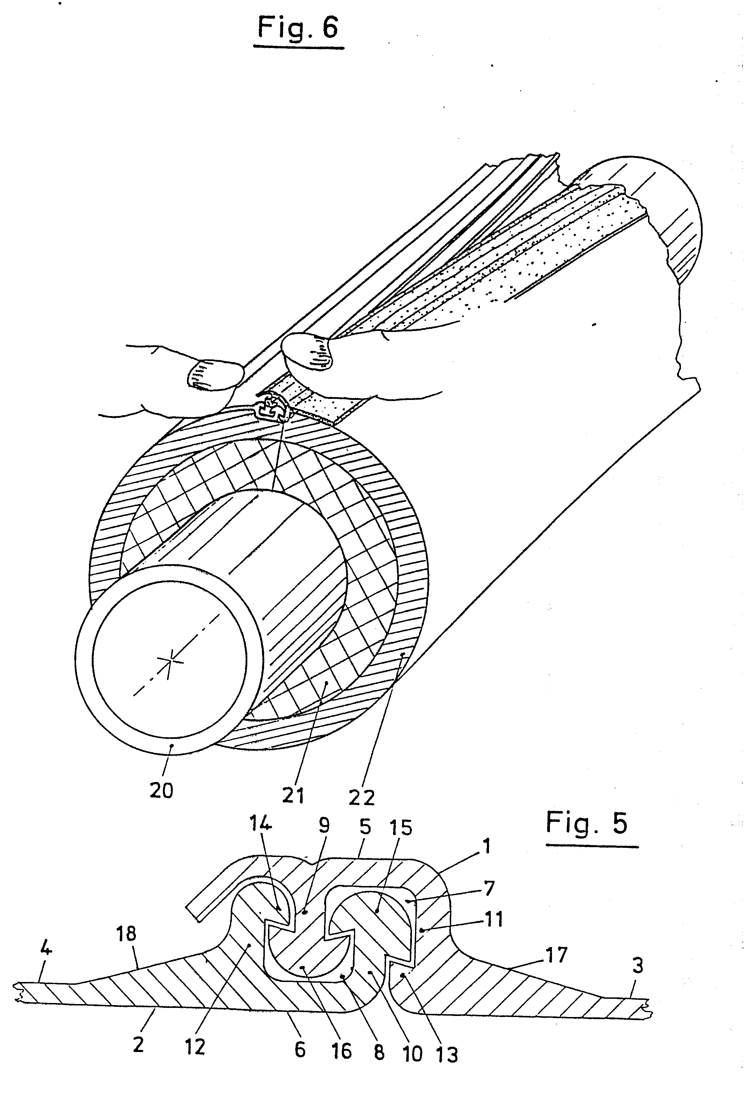

In Fig. 5 ist eine weitere Ausführungsform der erfindungsgemäßen Verschlußbänder in einem Querschnitt dargestellt. Es handelt sich, wie ohne weiteres ersichtlich ist, um eine Kombination mit verstärkten Nut-Stegrücken ähnlich Figur 2 sowie mit senkrecht zueinander versetzt angeordneten Eingriffsflächen der Haken ähnlich Figur 3.

In Fig. 6 sind die erfindungsgemäßen Verschlußbänder in ihrer vorzugsweisen Verwendung zum Verbinden der beiden Enden einer Umkleidung für Rohrleitungen dargestellt, die aus einer Isolierlage aus formbarem Isolierwerkstoff und einer nach erfolgter Umhüllung der Rohrleitung die Außenseite bildenden Umhüllung besteht, an deren einander zugekehrten Längskanten die miteinander verschließbaren und wieder voneinander lösbaren Verschlußbänder nach der Erfindung angeordnet sind. Der besondere Vorteil der erfindungsgemäßen Verschlußbänder für diesen Anwendungszweck, auf welchem Anwendungsgebiet Rohrverkleidungen auch von Laien verlegt bzw. ausgewechselt zu werden pflegen, besteht darin, daß eine eindeutige Zuordnung nur eines einzigen Doppel-Haken-Profilsteges zu einer einzigen Einrillen-Nut gewährleistet ist. Dieser Vorteil ist unter Beibehaltung der üblichen, kleinen Dimensionierung des Verschlusses erreicht worden. Gleichwohl ist die Festigkeit des Verschlusses gegenüber einem unbeabsichtigten Öffnen im Vergleich zum Stand der Technik wesentlich verbessert.

In Fig. 6 sind das erfindungsgemäße Verschlußband in seiner
vorzugsweisen Anwendung zum Verbinden der beiden Enden einer
Umkleidung für Rohrleitungen dargestellt. Die Rohrleitung
20 ist mit einer Isolierlage 21 aus formbarem Isolierwerkstoff
umkleidet und mit einer Umhüllung 22 versehen, welche die
Außenseite der Rohrumkleidung bildet. An den Längskanten der
miteinander zu verschließenden und wieder voneinander zu trennenden Umhüllung ist je ein erfindungsgemäßer Verschlußstreifen befestigt. Der Schnitt durch den Verschluß läßt erkennen,
daß die beiden Enden der Umhüllung aus den erwähnten Gründen
auch von einem Laien bequem miteinander verhakt werden können.

<u>P a t e n t a n s p r ü c h e</u>

1. Verschlußband aus Kunststoff, bestehend aus zwei Befestigungsstreifen und je einem Verschlußrücken, in welchem
nur eine Rillen-Profilnut bzw. nur ein komplementar ausgebildeter Rillen-Profilsteg zum gegenseitigen Ineinandergreifen angeordnet sind, deren Vertiefung bzw. Erhebung
sich jeweils senkrecht zu einem Verschluß-Rücken erstreckt,
vorzugsweise zum Verbinden der beiden Enden einer Umkleidung für Rohrleitungen, die aus einer Isolierlage aus formbarem Isolierwerkstoff und aus einer nach erfolgter Umhüllung der Rohrleitung die Außenseite bildenden Umhüllung
besteht, an deren einander zugekehrten Längskanten die
miteinander verschließbaren und wieder voneinander lösbaren Verschlußbänder angeordnet sind,
d a d u r c h   g e k e n n z e i c h n e t ,
daß Profilsteg und Profilnut mit Hilfe von sechs Haken
gegenseitig gehalten sind.

2. Verschlußband nach Anspruch 1, dadurch gekennzeichnet,
daß die beiden senkrechten Stege der Rillen-Profilnut
einerseits mit einem nach innen gerichteten Haken und
andererseits mit einem Doppel-Haken ausgebildet sind und
daß nur ein Rillen-Profilsteg zugeordnet ist, der gleichfalls als Doppel-Haken ausgebildet ist.

3. Verschlußband nach Anspruch 1 oder 2, dadurch gekennzeichnet, daß der Rücken des mit einem nach innen gerichteten Haken ausgebildeten Nut-Steges verstärkt ist.

4. Verschlußband nach einem der Ansprüche 1 bis 3, dadurch gekennzeichnet, daß die Hakenflache eines Doppel-Hakens senkrecht zueinander versetzt angeordnet sind, daß die und Befestigungsstreifen im wesentlichen in der gleichen waagerechten Ebene außen an den Nutstegen angesetzt sind.

5. Verschlußband nach einem der Ansprüche 1 bis 4, dadurch gekennzeichnet, daß die Haken leicht hinterschnitten ausgebildet sind.

6. Verschlußband nach einem der Ansprüche 1 bis 5, dadurch gekennzeichnet, daß wenigstens an einem Befestigungsband eine Aufreißfahne ausgebildet ist.

7. Verschlußband nach einem der Ansprüche 1 bis 6, dadurch gekennzeichnet, daß der Rücken des mit einem nach innen gerichteten Haken ausgebildeten Nut-Steges verstärkt ist.

8. Verschlußband nach einem der Ansprüche 1 bis 7, dadurch gekennzeichnet, daß zwecks Ausbildung als Druck- oder Schiebeverschluß mit Kopf-Schieber ein Befestigungsstreifen an einem Verschlußrücken angesetzt ist und beide Befestigungsstreifen sich in derselben Richtung erstrecken.

1/2

0254849

Fig. 1

Fig. 2

Fig. 3

Fig. 4

0254849

# Fig. 6

20  21  22

# Fig. 5

14  9  5  15  1
7
11
4  18  17  3
2  12  6  16  8  10  13

# Europäisches Patentamt
# EUROPÄISCHER RECHERCHENBERICHT

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int. Cl.4) |
|---|---|---|---|
| X | GB-A- 943 668 (LIGHTNING FASTENERS) * Seite 1, Zeile 87 – Seite 2, Zeile 29; Figuren * | 1-8 | A 44 B 19/16 F 16 L 59/10 |
| X | FR-A-1 106 141 (TRANS-EUROPE) * Seite 1, linke Spalte, letzter Absatz; Seite 2, rechte Spalte, erster Absatz; Figuren * | 1-8 | |
| X | FR-A-1 168 794 (STOCKMANS) * Seite 1, linke Spalte, zwei letzten Absätze; Figuren * | 1-8 | |
| A | FR-A-1 036 544 (PODOL SKY) * Zusammenfassung, Punkte 1a,b,c,e; Figuren 3,5 * | 1-8 | |
| A | US-A-4 578 813 (AUSNIT) * Anspruch 1; Figuren 2-4 * | 1-8 | |
| A | FR-A-1 097 218 (LOSCHITZ) | | |

**RECHERCHIERTE SACHGEBIETE (Int. Cl.4)**

A 44 B

Der vorliegende Recherchenbericht wurde für alle Patentansprüche erstellt

| Recherchenort | Abschlußdatum der Recherche | Prüfer |
|---|---|---|
| DEN HAAG | 29-10-1987 | BOURSEAU A.M. |

EPO FORM 1503 03.82 (P0403)